# FASCICULE DE BREVET EUROPEEN

(11) **EP 0 689 882 B1**
(45) Date de publication et mention de la délivrance du brevet: **17.03.1999**
(21) Numéro de dépôt: 94420185.4
(22) Date de dépôt: 30.06.1994
(51) Int. Cl.: B09B 3/00, B03B 9/06, B29B 17/02

(54) **Procédé et dispositif pour le compactage de déchets**
Verfahren und Vorrichtung zum Verdichten von Abfällen
Process and apparatus for compacting waste

(43) Date de publication de la demande: 03.01.1996
(73) Titulaire: RHONE POULENC AGRO S.p.A., 00136 ROMA (IT)
(72) Inventeur: D'Alfonso, Pietro, I-67016 L'Aquila Paganica (IT); Di Giacomo, Pasquale, I-67100 L'Aquila (IT); Regondi, Natale, I-67016 l'Aquila Paganica (IT)
(74) Mandataire: Chrétien, François

(56) Documents cités:
- EP-A- 0 094 282
- EP-A- 0 574 328
- WO-A-91/18687
- DE-U- 9 306 857
- GB-A- 2 032 842
- GB-A- 2 065 506

## Description

La présente invention a pour objet un procédé et un dispositif pour le compactage des déchets ainsi que les déchets compactés obtenus par ce procédé.

La destruction des déchets industriels est devenue un problème majeur en raison du souci des collectivités-d'un respect croissant de l'environnement. De nombreuses lois ont rendu obligatoire la destruction des déchets ou leur stockage dans des conditions d'innocuité suffisante. Dans l'industrie agrochimique le problème est particulièrement important notamment en ce qui concerne l'élimination des emballages ayant contenu des produits agrochimiques.

Divers procédés et appareillages on été proposés pour le compactage des emballages (GB 2 065 506, EP 574 328) mais soit ils sont trop coûteux en énergie, soit donnnent des déchets compactés de grand volumes ou qui concervent une toxicité nécessitant leur classement comme des produits chimiques, ce qui compliquent leur conditions de stockage, voire de destruction.

La présente invention a pour but un procédé et un dispositif permettant la production économique de déchets compactés de petites dimensions et de toxicité très réduite, avec récupération des produits toxiques.

Ce but est atteint à l'aide d'un procédé d'obtention de blocs de parties d'emballages compactés comprenant successivement:
a) une étape d'alimentation en emballages, ou morceaux d'emballage, usagés et contenant des résidus de produits toxiques, généralement pulvérulents, par tout moyen tel que alimentation manuelle et/ou automatique, tel que transporteur- élévateur ou à bande ou pneumatique, dans un récipient collecteur tel qu'une trémie. Les emballages sont introduits dans le collecteur soit tels que soit déjà sous forme ramassée ou pliée. Ils peuvent être également être entier ou sous une forme prédéchiquetée.
   Par emballage au sensde la présente invention, on entend des sacs, sachets de toutes dimensions en matière souple telle que à base de matière cellulosique telle que papier, carton, ou encore à base de films ou fils ou de bandelettes en polymères synthétiques comme par exemple polyoléfines (polyéthylène (polytène), polypropylène..). Ils peuvent en outre contenir d'autres constituants tels que sciure, caoutchouc, chiffons etc. Bien entendu la matière d'emballage peutêtre constitué de mélanges de ces divers matières.
b) à la sortie de l'étape d'alimentation, les emballages sont dirigés, par exemple par gravité ou par propulsion pneumatique, vers une étape de broyage qui les transforme en morceaux ou en rubans de forme et de dimensions variable en fonction de la dimension de départ, de la puissance de broyage et de la nature des emballages. Dans cette étape les produits toxiques est séparé dela matièrede l'emballage mais sont transportés avec les rubans hors de la section de broyage.
c) L'ensemble "emballages déchiquetés - produits toxiques" passe dans une étape de de séparation par tout moyen convenable comme par exemple une séparation pneumatique: ces emballages passent d'un état correspodant à une classification "polluant" à un état correspondant à une classification "peu polluant"
d) les emballages dépollués sont ensuite soumis de préférence en continu, à une étape de compactage soit en une étape soit en deux, selon la dimension de l'emballage et la résistance du matériau constituant l'emballage. Le produit résultant se présente sous la forme d'un bloc/boudin continu ou discontinu, compact, de section par exemple parallépipèdique, en particulier de section carrée.
e) le bloc compact est ensuite enveloppé, de préférence en continu, à l'aide d'un film ou d'une grille en matière plastique de préférence extensible, qui s'enroule de manière hélicoïdale autour du bloc pour maintenitr la cohésionde ce dernier et assurer ultérieurement sa manipulabilité. Cette opération est d'autant plus nécessaire que la teneur du matériau des emballages est plus riche on polymère synthétique.
f) le bloc compact enveloppé est découpé, de préférence en continu, en tranches d'épaisseur dépendant du matériau constitutif des sacs et de l'utilisation finale des déchets (élimination ou stockage).
g) les morceaux découpés sont ensuite dirigés vers un récipient ou une aire de stockage pour mise à dispsoition pour leur utilisation finale, à savoir transport dans une zone de collectage de déchets pour stockage, enfouissement ou destruction, par exemple par brûlage ou incinération.

Ces différentes étapes peuvent être réalisées en discontinu ou de préférence en continu, pour assurer une rentabilité économique suffisante.

L'invention a également pour objet des blocs de morceaux d'emballages compactés à base de matières cellulosiques et/ou de matières polymères thermoplastiques, caractérisés en ce que leur densité est supérieure à 500 kg/m³, de préférence à 800 kg/m³.

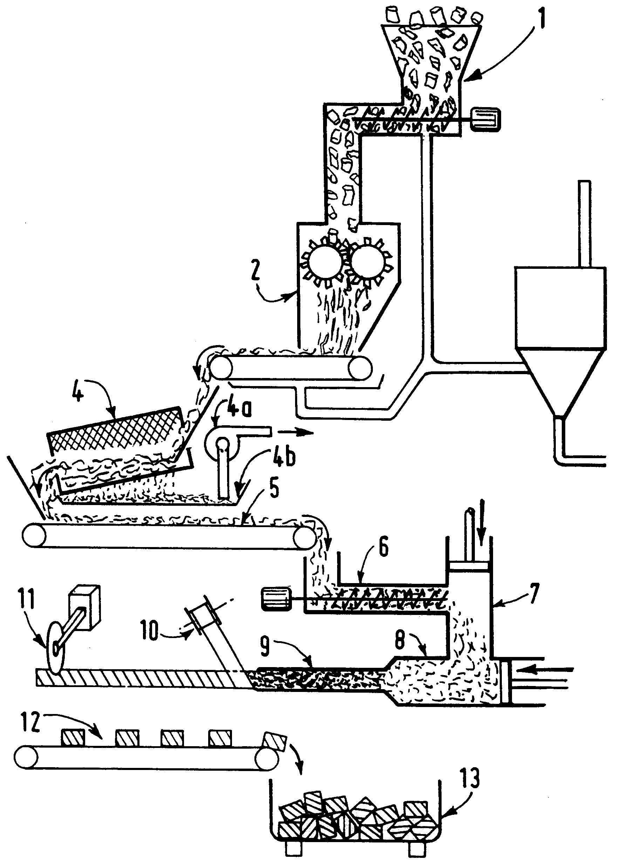

L'invention a également pour objet un dispositif pour la mise en oeuvre du procédé ci-dessus comprenant les sections correspondant aux étapes décrites ci-dessus.
a) une section d'alimentation en emballages
b) une section de broyage
c) une section de séparation
d) une section de compactage des emballages dépollués
e) une section d'enveloppement
f) une section de découpage,
g) un récipient ou une aire de stockage
   L'invention sera mieux comprise à l'aide de la description suivante d'une installation de compactage industriel, représentée schématiquement à la figure 1, et de son fonctinnement sur la base d'un exemple d'opération.

### Celle-ci comprend:

a) une section d'alimentation en emballages, ici des sacs à base de 60% en poids de papier et 40% de polyéthylène, alimentée par un convoyeur en sacs pleins de produits et prélablement ouverts, qui sont vidés dans la trémie verticale 1, dite machine à dépoter les sacs, le produit étant récupéré par le bas et les sacs vides usagés évacués de côté par un glissement sur une grille métallique inclinée et reprise par un convoyeur qui les conduits vers
b) une section de broyage, ici sous la forme d'un triturateur 2 en forme de trémie tronconique, capable de déchiqueter aussi bien les matières plastiques que le papier ou le carton, dans lequel les sacs passent verticalement et où ils sont déchiquetés, sous forme de bandelettes, le tout étant repris sur un tapis roulant avec une aspiration placée en dessous, pour capter les poussières, pour alimenter
c) une section de séparation sous forme d'une unité de triage à tambour rotatif 4, constitué d'un cylindre horizontal dont la surface cylindrique est constitué d'un grillage à mailles carrées de 5 mm de côté. Les sacs déchiquetés passent à l'intérieur du tambour et, du fait du mouvement de celui-ci, la poudre de produit est séparée par aspiration 4a placée au dessous du tambour et recueillie dans un récipient 4b. Les sacs déchiquetés, exempts de prroduit sont repris par un tapis roulant 5 et une vis d'alimentation 6 et déchargés, du côté opposé à l'alimentation vers
d) la section de compactage sous forme d'un compacteur comprenant une chambre verticale de précompactage 7 dans laquelle agit un piston vertical, débouchant sur une chambre de compactage 8 horizontale où les sacs sont compactés à l'aide d'un piston horizontal actionné par un moteur et exerçant une pression, par exemple de 170 bar, la matière, compactée à une densité pouvant par exemple aller de 500 à 1000 kg/m³, est ensuite poussée vers:
e) la section d'enveloppement qui comprend une tubulure 9, dans lequel le bloc comprimé est poussé en force avec pour effet que ses dimensions sont resserrées jusqu'aux dimensions de la section d'emballage. Le boudin ainsi créé est ensuite enveloppé en continu dans la zone 10 par un film étirable en polyéthylène délivré en continu à partir d'un rouleau de film; le pas d'enveloppement est d'autant plus serré que la matière à envelopper est plus friable; le boudin enveloppé est ensuite poussé sur des rouleaux vers:
f) la section de découpage contituée d'un couteau vertical rotatif 11 , qui découpe par intermittence des tranches d'épaisseur variable qui peut aller de 1 à 200, de préférence de 1 à 120cm, qui sont dirigées, au moyen d'un tapis roulant 12, vers: g) une section de stockage 13.

Tout cette installation peut fonctionner en continu ou discontinu, en automatique ou en manuel avec une capacité de 10 à 150 kg/h.

En utilisant ce procédé et le dispositif selon l'invention on a pu obtenir des blocs, par exemple de section carrée de 10 cm de côté et 25 cm de longueur, ayant une densité de 600 à 1000 kg/m³ avec un résidu de 3g par sac, ce qui représente un taux de compression au moins dix fois supérieur aux procédés connus.

## Revendications

1. Procédé d'obtention de blocs de parties d'emballages compactés, usagés et contenant des résidus de produits toxiques comprenant successivement:
a) une étape d'alimentation des emballages dans un récipient collecteur,
b) une étape de broyage qui les transforme en morceaux ou en bandelettes,
c) une étape de séparation de la matière des emballages et des produits toxiques contenus dans ces emballages, ces emballages passent d'un état correspondant à une classification "polluant" à un état correspondant à une classification "peu polluant",
d) une étape de compactage en au moins une phase,
e) une étape d'enveloppement, à l'aide d'un film ou d'une grille en matière plastique de préférence extensible, et
g) une étape de réception et stockage,
caractérisé en ce que
- l'étape de compactage est réalisée de manière à former un bloc/boudin continu ou discontinu, compact,
- l'étape d'enveloppement est réalisée à l'aide d'un film ou d'une grille en matière plastique qui s'enroule autour du bloc pour maintenir la cohésion de ce dernier et assurer ultérieurement sa manipulabilité,
- le procédé comprenant en outre entre les étapes e) et g) une étape f) de découpage en tranches (élimination ou stockage).

2. Procédé selon la revendication 1, caractérisé en ce que l'étape de compactage comprend deux phases, une de précompactage et une de compactage.

3. Procédé selon l'une des revendications 1 ou 2, caractérisé en ce l'étape de découpage est réalisée en continu.

4. Procédé selon l'une des revendications 1 à 3, caractérisé en ce que la matière plastique est extensible.

5. Blocs de morceaux d'emballages compactés à base de matières cellulosiques et/ou de matières polymères thermoplastiques, caractérisés en ce qu'ils sont susceptibles d'être obtenus par le procédé selon les revendications 1 à 4.

6. Blocs selon la revendication 5, caractérisés en ce que leur densité est supérieure à 500 kg/m³, de préférence supérieure à 800 kg/m³.

7. Dispositif pour l'obtention de blocs de parties d'emballages compactés, usagés et contenant des résidus de produits toxiques comprenant successivement:
a) une section d'alimentation (1) des emballages dans un récipient collecteur,
b) une section de broyage (2) qui les déchiquette en morceaux ou en bandelettes,
c) une section de séparation de la matière des emballages déchiquetés et des produits toxiques contenus dans ces emballages (4),
d) une section de compactage (7, 8) des emballages dépollués en au moins une phase,
e) une section d'enveloppement (9, 10), à l'aide d'un film ou d'une grille en matière plastique de préférence extensible, qui s'enroule autour du bloc,
f) une section de découpage (11), de préférence en continu, en tranches,
g) un récipient ou une aire de stockage (13).

8. Dispositif selon la revendication 7, caractérisé en ce que la section de broyage est constituée par un triturateur (2).

9. Dispositif selon la revendication 7, caractérisé en ce que la section de séparation est assurée par une unité de triage (4) sur grille associée à une aspiration

10. Dispositif selon la revendication 7, caractérisé en ce que la section de compactage comprend une chambre verticale de précompactage (7), débouchant sur une chambre de compactage (8) horizontale donnant à la matière compactée une densité de 500 à 1000 kg/m³.

## Claims

1. Method for obtaining blocks of bits of compacted, used packaging containing residues of toxic products, comprising, in succession:
a) a stage of feeding the packaging into a collecting container,
b) a shredding stage which converts it into pieces or strips,
c) a stage of separating the packaging material and the toxic products contained in this packaging; this packaging passes from a state corresponding to a "polluting" classification to a state corresponding to a "not-very-polluting" classification,
d) a stage of compacting in at least one phase,
e) a stage of wrapping, using a preferably extensible plastic film or mesh, and
g) a receiving and storage stage,
characterized in that
- the compacting stage is carried out in such a way as to form a compact, continuous or discontinuous block/sausage,
- the wrapping stage is carried out using a plastic film or mesh which is wound around the block to hold this block together and later allow it to be handled,
- the method further comprising, between stages e) and g) a stage f) of cutting into slices (elimination or storage).

2. Method according to claim 1, characterized in that the compacting stage comprises two phases, one of precompacting and one of compacting.

3. Method according to either of claims 1 and 2, characterized in that the cutting stage is performed continuously.

4. Method according to one of claims 1 to 3, characterized in that the plastic is extensible.

5. Blocks of pieces of compacted packaging based on cellulose-containing materials and/or thermoplastic polymer materials, characterized in that they can be obtained by the method according to claims 1 to 4.

6. Blocks according to claim 5, characterized in that their density is greater than 500 kg/m³, preferably greater than 800 kg/m³.

7. Device for obtaining blocks of bits of compacted, used packaging containing residues of toxic products, comprising, in succession:
a) a section (1) for feeding the packaging into a collecting container,
b) a shredding section (2) which tears it into pieces or strips,
c) a section (4) for separating the torn-up packaging material and the toxic products contained in this packaging,
d) a section (7, 8) far compacting the decontaminated packaging in at least one phase,
e) a section (9, 10) for wrapping using a preferably extensible plastic film or mesh which is wound around the block,
f) a section (11) for cutting into slices, preferably continuously,
g) a storage container or area (13).

8. Device according to claim 7, characterized in that the shredding section consists of a pulper (2).

9. Device according to claim 7, characterized in that the separation section is provided by a unit (4) for sorting over a grating associated with suction.

10. Device according to claim 7, characterized in that the compacting section comprises a vertical precompacting chamber (7) opening onto a horizontal compacting chamber (8) which gives the compacted material a density of 500 to 1000 kg/m³.

## Patentansprüche

1. Verfahren zur Herstellung von verpreßten Blöcken aus Teilen gebrauchter Verpackungsmaterialien, die Rückstände toxischer Produkte enthalten, das folgende nacheinander durchgeführte Stufen umfaßt:
a) eine Zuführungsstufe, in der die Verpackungsmaterialien einem Sammelbehälter zugeführt werden,
b) eine Zerkleinerungsstufe, in der die Verpackungsmaterialien zu Stücken oder Streifen zerkleinert werden,
c) eine Trennstufe zur Trennung des Verpackungsmaterials von den darin enthaltenen toxischen Produkten, in der die Verpackungsmaterialien von einem der Klassifizierung "umweltverschmutzend" entsprechenden Zustand in einen der Klassifizierung "gering umweltverschmutzend" entsprechenden Zustand übergeführt werden,
d) eine Verpreßstufe, in der in mindestens einem Schritt verpreßt wird,
e) eine Einpackstufe, in der mit einer Folie oder einem Netz aus Kunststoff, die vorzugsweise dehnbar sind, umhüllt wird, sowie
g) eine Aufbewahrungs- und Lagerstufe,
dadurch gekennzeichnet, daß
- die Verpreßstufe so durchgeführt wird, daß ein kontinuierlicher oder diskontinuierlicher verpreßter Block/Strang gebildet wird,
- die Einpackstufe unter Verwendung einer Folie oder eines Netzes aus Kunststoff durchgeführt wird, die um den Block herumgewickelt werden, um ihn zusammenzuhalten und seine spätere Handhabbarkeit zu gewährleisten,
und
- das Verfahren ferner zwischen den Stufen e) und g) eine Schneidstufe f) aufweist, in der ein Schneiden zu Stücken (Beseitigung oder Lagerung) erfolgt.

2. Verfahren nach Anspruch 1, dadurch gekennzeichnet, daß die Verpreßstufe zwei Schritte, einen Vorverdichtungsschritt und einen Verpreßschritt, umfaßt.

3. Verfahren nach Anspruch 1 oder 2, dadurch gekennzeichnet, daß die Schneidstufe kontinuierlich durchgeführt wird.

4. Verfahren nach einem der Ansprüche 1 bis 3, dadurch gekennzeichnet, daß das Kunststoffmaterial dehnbar ist.

5. Blöcke aus verpreßten Stücken von Verpackungsmaterial auf der Basis von Cellulosematerialien und/oder thermoplastischen Polymermaterialien, dadurch gekennzeichnet, daß sie nach dem Verfahren der Ansprüche 1 bis 4 erhältlich sind.

6. Blöcke nach Anspruch 5, dadurch gekennzeichnet, daß ihre Dichte mehr als 500 kg/m³ und vorzugsweise mehr als 800 kg/m³ beträgt.

7. Vorrichtung zur Herstellung von verpreßten Blöcken aus Teilen gebrauchter Verpackungsmaterialien, die Rückstände toxischer Produkte enthalten,
die folgende hintereinandergeschaltete Anschnitte aufweist:
a) einen Zuführungsabschnitt (1), in dem die Verpackungsmaterialien einem Sammelbehälter zugeführt werden,
b) einen Zerkleinerungsabschnitt (2), in dem die Verpackungsmaterialien zu Stücken oder Streifen zerkleinert werden,
c) einen Trennabschnitt (4), in dem das zerkleinerte Verpackungsmaterial und die darin enthaltenen toxischen Produkte voneinander getrennt werden,
d) einen Verpreßabschnitt (7, 8), in dem die in mindestens einer Stufe von Verunreinigungen befreiten Verpackungsmaterialien verpreßt werden,
e) einen Einpackabschnitt (9, 10), in dem der Block mit einer Folie oder einem Netz aus Kunststoff, die vorzugsweise dehnbar sind, umwickelt wird,
f) einen Schneidabschnitt (11), in dem, vorzugsweise kontinuierlich, zu Stücken geschnitten wird, sowie
g) einen Lagerbehälter oder eine Lagerfläche (13).

8. Vorrichtung nach Anspruch 7, dadurch gekennzeichnet, daß der Zerkleinerungsabschnitt aus einer Mühle (2) besteht.

9. Vorrichtung nach Anspruch 7, dadurch gekennzeichnet, daß der Trennabschnitt durch eine Siebklassiereinheit (4) mit Absaugung gebildet wird.

10. Vorrichtung nach Anspruch 7, dadurch gekennzeichnet, daß der Verpreßabschnitt eine senkrechte Vorverdichtungskammer (7) aufweist, die in eine waagerechte Verpreßkammer (8) mündet, in der das verpreßte Material eine Dichte von 500 bis 1000 kg/m³ erhält.
